# EUROPÄISCHE PATENTANMELDUNG

(11) **EP 0 722 661 A2**
(43) Veröffentlichungstag der Anmeldung: **24.07.1996**
(21) Anmeldenummer: 96100308.4
(22) Anmeldetag: 11.01.1996
(51) Int. Cl.: A21C 5/00

(54) **Verfahren und Vorrichtung zur Herstellung von Kleingebäck**

(30) Priorität: 21.01.1995 DE 19501790
(71) Anmelder: Werner & Pfleiderer Lebensmitteltechnik GmbH, D-91550 Dinkelsbühl (DE)
(72) Erfinder: Meier, Alexander, D-91602 Dürrwangen (DE)
(74) Vertreter: Rau, Manfred, Dr. Dipl.-Ing.

(57) **Zusammenfassung**

Bei einem Verfahren zur Aufbereitung von Teigstücken zur Herstellung von Kleingebäck, wie etwa rustikaler Brötchen, wobei die Teigstücke mittels einer Trenneinrichtung aus einer Teigmasse hergestellt werden, ist vorgesehen, daß aus der Teigmasse durch Abziehen ein Teigband gebildet wird, wobei das Teigband durch eine Strahl-Trenneinrichtung in Längs- bzw. Förderrichtung des Teigbandes und/oder quer hierzu durch eine Strahl-Trenneinrichtung in Teilstücke aufgeteilt wird.

## Beschreibung

Die Erfindung richtet sich auf ein Verfahren zur Aufbereitung von Teigstücken zur Herstellung von Kleingebäck, wie etwa rustikaler Brötchen, wobei die Teigstücke mittels einer Trenneinrichtung aus einer Teigmasse hergestellt werden. Die Erfindung betrifft weiterhin eine Vorrichtung zur Aufbereitung von Teigstücken zur Herstellung von Kleingebäck, wie etwa rustikalen Brötchen, umfassend eine Teig-Zuführeinrichtung und eine Trenneinrichtung zum Abtrennen einzelner Teigstücke aus der Teigmasse.

Ein Verfahren und eine Vorrichtung der in Betracht stehenden Art sind aus der DE 43 09 431 C1 bekannt. In dieser Druckschrift wird bereits erläutert, daß es Anlagen zur kontinuierlichen und automatischen Aufbereitung von gegebenenfalls auch unterschiedlich gestalteten Teigstücken für Kleingebäck, wie eingeschlagene Brötchen, Schrippen bzw. Formgebäck, wie gestüpfelte Teigwaren oder Teigwaren mit rustikaler und eckiger Form gibt.

Insbesondere eckige, rustikale Brötchen mit einer entsprechend strukturierten Oberfläche erfreuen sich zunehmender Beliebtheit. Solche rustikale Brötchenarten werden herkömmlicherweise meist mit einer Platten- bzw. Tellerwirk- und Teilmaschine hergestellt. Dies macht noch in erheblichem Umfang eine manuelle Tätigkeit erforderlich.

Weiterhin ist es bekannt, eckige Teigstücke bei abgeschaltetem Rundwirker mittels eckiger Meßkolben auf einer Teigteilmaschine abzuteilen. Hierbei können aber nur einfache Brötchen aus festen Teigen, z.B. Roggenteig, mit annähernd stabiler eckiger Form hergestellt werden. Demgegenüber lassen sich weiche Teige, z.B. Weizenteige, auf diese Weise nicht zu rustikalen Brötchen mit den gewünschten Oberflächeneigenschaften verarbeiten.

Im Zusammenhang mit dieser Problematik ist gemäß der bereits genannten DE 43 09 431 C1 eine Anlage vorgesehen.

Weiterhin sind für die Herstellung unterschiedlich großer bzw. unterschiedlich geformter Teigstücke unterschiedliche Teileinrichtungen erforderlich.

Hiervon ausgehend liegt der Erfindung die Aufgabe zugrunde, ein Verfahren und eine Vorrichtung zu schaffen, die die Aufbereitung von Teigstücken ausgehend von einer Teigmasse ermöglichen, wobei gleichzeitig die problemlose Teilung auch weicher Teige in beliebig geformte Teilstücke realisierbar sein soll.

Diese Aufgabe wird einerseits gelöst durch ein Verfahren, welches sich dadurch auszeichnet, daß aus der Teigmasse durch Abziehen ein Teigband gebildet wird, wobei das Teigband durch eine Strahl-Trenneinrichtung in Längs- bzw. Förderrichtung des Teigbandes und/oder quer hierzu durch eine Strahl-Trenneinrichtung in Teilstücke aufgeteilt wird.

Durch diese erfindungsgemäße Aufbereitungstechnik wird der Einsatz von mechanischen Schneiden bzw. Teilformen vermieden, so daß eine Oberfläche der hergestellten Teilstücke entsteht, die beim Backen eine optimale, den Verbraucherwünschen entsprechende Oberflächenstruktur aufweist.

Im Rahmen der Erfindung ist die Verwendung ganz unterschiedlicher Strahl-Trenneinrichtungen denkbar, z.B. Strahlen von Luft bzw. Heißluft bzw. anderen Gasen oder Dampf sowie hochenergetische Strahlung, wie Laserstrahlung. Bevorzugt ist allerdings die Verwendung von Wasserstrahl-Schneideinrichtungen, weil solche Einrichtungen in ausgereifter Technologie aus anderen Anwendungsbereichen vorliegen. Besonders günstig ist auch Speiseöl als Trennmedium, weil hierdurch besonders vorteilhafte Oberflächenbeschaffenheiten erzielt werden.

Günstigerweise ist vorgesehen, daß das Teigband durch eine Mehrzahl von quer zur Förderrichtung nebeneinander angeordneten Strahl-Schneideinrichtungen in Teigstreifen geteilt und die einzelnen Teigstreifen durch wenigstens eine quer zur Förderrichtung bewegbare Strahl-Trenneinrichtung in einzelne Teigstücke geteilt werden.

Diese Ausgestaltung eignet sich insbesondere, wenn im wesentlichen rechteckige oder quadratische Teigstücke, wie z.B. für entsprechend geformte rustikale Brötchen, hergestellt werden sollen. Dabei kann das Teigband für die Teilung in Streifen kontinuierlich in Längsrichtung bewegt werden. Für die Teilung quer zur Längsrichtung ist es entweder denkbar, eine intermittierende Bewegung vorzusehen, d.h. die Transportbewegung während der Querteilbewegung ruhen zu lassen, oder aber die Bewegung der Schneideinrichtung quer zur Transportrichtung so schnell vorzunehmen, daß diese erheblich schneller ist als die Transportbewegung und dementsprechend optisch quasi-rechteckige Stücke geschaffen werden. Weiterhin ist es denkbar, mehrere Trenneinrichtungen nebeneinander für den Trennvorgang quer zur Förderrichtung vorzusehen, so daß jede einzelne Trenneinrichtung nur relativ kleine Wegstrecken zurücklegen muß.

Für die Herstellung von Teigstücken, die nicht rechteckig geformt sind, ist es auch denkbar, daß das Teigband durch wenigstens eine durch eine CNC-gesteuerte, elektronisch gesteuerte oder kurvengesteuerte Strahl-Trenneinrichtung geteilt wird, so daß nahezu beliebige, gegebenenfalls auch eine komplizierte Konfiguration aufweisende Formen realisiert werden können.

Die Erfindung wird andererseits auch gelöst durch eine Vorrichtung, die die zur Durchführung des vorstehend angesprochenen Verfahrens erforderlichen Strahl-Trenneinrichtungen aufweist.

Weiterhin kann eine solche Vorrichtung eine Einrichtung zur Herstellung eines Teigbandes aufweisen, welche z.B. durch zwei hintereinander angeordnete Walzenpaare gebildet sein kann.

Günstigerweise wird in einer erfindungsgemäßen Vorrichtung das Teigband nach dem Abziehen aus dem Vorratsbehälter bzw. -trichter auf eine im wesentlichen horizontale Transporteinrichtung, also insbesondere ein Förderband, umgelenkt. Am Ende eines solchen ersten Förderbandes können dann die Schneid-Trenneinrichtungen zur Herstellung von Teigstreifen angeordnet sein.

Günstigerweise ist im Anschluß daran eine Spreizeinrichtung vorgesehen, die aus einer Mehrzahl von in Förderrichtung divergierenden Teilförderbändern für die einzelnen gebildeten Teigstreifen besteht.

Danach kann wenigstens eine weitere Strahl-Trenneinrichtung vorgesehen sein, die quer verfahrbar ist und aus den Streifen einzelne Teigstücke herstellt, wobei die Länge dieser Teiglinge einstellbar bzw. veränderbar ist.

Dieser Trenneinrichtung ist günstigerweise eine weitere Fördereinrichtung nachgeordnet, die so angetrieben wird, daß die einzelnen, neu gebildeten Teilstücke in Förderrichtung den gewünschten Abstand voneinander aufweisen.

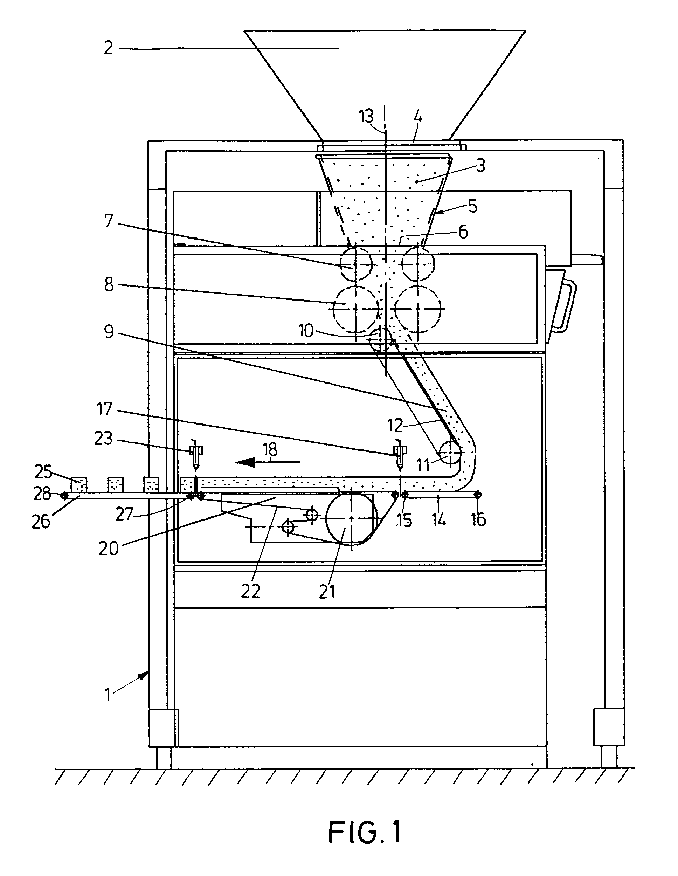

Nachfolgend wird die Erfindung anhand eines bevorzugten Ausfüheungsbeispiels in Verbindung mit der Zeichnung näher erläutert. Dabei zeigen
- Fig. 1: eine schematische Seitenansicht einer erfindungsgemäßen Vorrichtung,
- Fig. 2: eine gegenüber Fig. 1 um 90° versetzte Ansicht der Stirnseite der erfindungsgemäßen Vorrichtung und
- Fig. 3: eine Aufsicht auf die erfindungsgemäße Vorrichtung.

Eine in der Zeichnung dargestellte Vorrichtung umfaßt ein Grundgestell 1, an dessen Oberseite ein Vorratstrichter 2 für die Teigmasse 3 angeordnet ist. An die Auslaßöffnung 4 des Vorratstrichters 2 schließt sich ein Zuführtrichter 5 an, an dessen Auslaßöffnung 6 zwei in vertikaler Richtung nacheinander angeordnete Förder- und Formgebungswalzenpaare 7, 8 angeordnet sind, welche auf die Teigmasse 3 derart einwirken, daß sie sie aus dem Zuführtrichter 5 unter Ausbildung eines Teigbandes 9 abziehen. Das so gebildete Teigband 9 wird auf ein über Rollen 10, 11 angetriebenes Förderband 12 entlassen, welches schräg zur Längsachse 13 der Trichter 2 und 5 verläuft. Nach der Antriebsrolle 11 wird das Teigband 9 in eine horizontale Richtung auf ein weiteres Förderband 14, welches um Rollen 15, 16 läuft, umgelenkt.

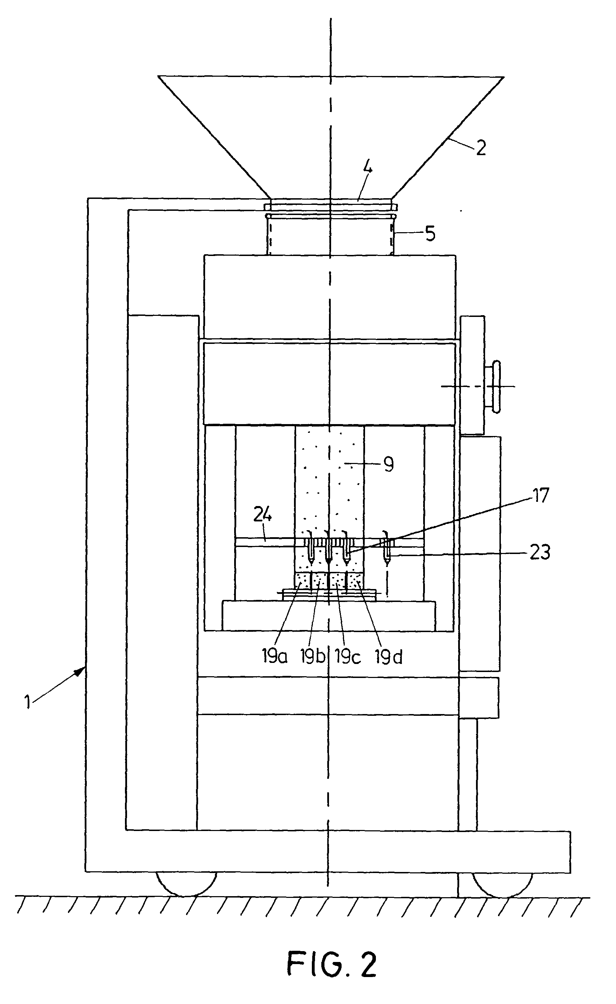

Dem Förderband 14 nachgeordnet sind drei Strahl-Trenneinrichtungen 17 in Form von Wasserstrahl-Schneiddüsen, welche quer zu dem Teigband 9 bzw. quer zur Förderrichtung (Pfeil 18) im Abstand voneinander vorgesehen sind, so daß (vgl. insbesondere Fig. 2) aus dem Teigband 9 durch die Strahl-Trenneinrichtungen 17 vier Teigstreifen 19a, 19b, 19c und 19d gebildet werden.

An die Strahl-Trenneinrichtungen 17 schließt sich in Förderrichtung (Pfeil 18) eine Spreizeinrichtung 20 an, wie sie aus der DE 43 09 431 C1 an sich bereits bekannt ist.

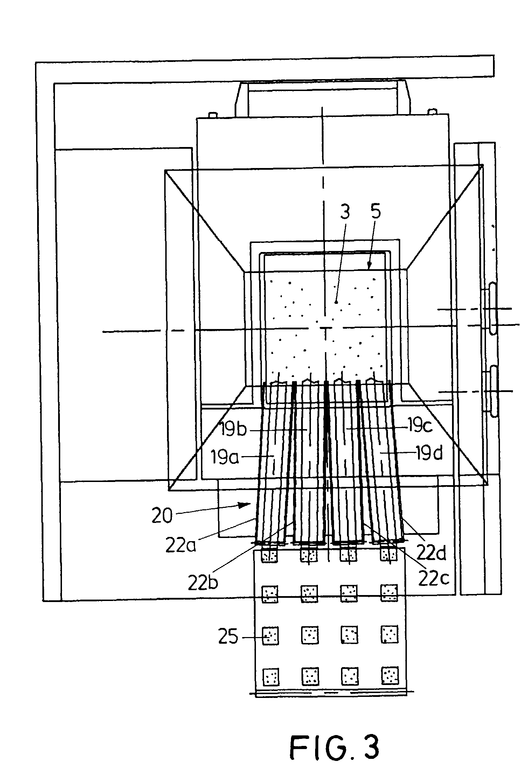

Diese Spreizeinrichtung 20 umfaßt drei über eine gemeinsame Trommel 21 angetriebene, divergierende Förderbänder 22 (vgl. insbesondere Fig. 3), welche durch ihre Divergenz dafür sorgen, daß die Teigstreifen 19a bis 19d voneinander separiert werden und dementsprechend nicht mehr zusammenkleben können.

Nach der Spreizeinrichtung 20 ist eine Schneid-Trenneinrichtung 23 vorgesehen, welche quer zur Förderrichtung (Pfeil 18) längs einer Schiene 24 über einen in der Zeichnung im einzelnen nicht dargestellten Antrieb verfahrbar gelagert ist. Durch diese Schneid-Trenneinrichtung 23 werden aus jedem Teigstreifen Teigstücke 25 abgetrennt, die über ein Förderband 26, welches über Rollen 27, 28 läuft, abtransportiert werden.

Durch die Einstellung der Relativgeschwindigkeiten bzw. die Antriebstaktung der Förderbänder 22 der Spreizeinrichtung 20 und des Förderbandes 26 läßt sich sowohl die Abmessung der Teigstücke 25 in Förderrichtung (Pfeil 18) als auch der Abstand der Teigstücke 25 zueinander gesehen jeweils in Förderrichtung einstellen.

Um gewirkte, runde Teiglinge herzustellen müßte über dem Transportband 26 eine Wirkeinrichtung oder nachfolgend ein Trommelwirker angeordnet werden. Eine derartige, an sich bekannte Wirkeinrichtung ist in der Zeichnung nicht dargestellt.

## Patentansprüche

1. Verfahren zur Aufbereitung von Teigstücken zur Herstellung von Kleingebäck, wie etwa rustikaler Brötchen, wobei die Teigstücke mittels einer Trenneinrichtung aus einer Teigmasse hergestellt werden, dadurch gekennzeichnet, daß aus der Teigmasse durch Abziehen ein Teigband gebildet wird, wobei das Teigband durch eine Strahl-Trenneinrichtung in Längs-bzw. Förderrichtung des Teigbandes und/oder quer hierzu durch eine Strahl-Trenneinrichtung in Teilstücke aufgeteilt wird.

2. Verfahren nach Anspruch 1, dadurch gekennzeichnet, daß als Trennmedium der Strahl-Trenneinrichtung Speiseöl verwendet wird.

3. Verfahren nach Anspruch 1 oder 2, dadurch gekennzeichnet, daß das Teigband durch eine Mehrzahl von quer zur Förderrichtung nebeneinander angeordneten Strahl-Schneideinrichtungen in Teigstreifen geteilt und die einzelnen Teigstreifen durch wenigstens eine quer zur Förderrichtung bewegbare Strahl-Trenneinrichtung in einzelne Teigstücke geteilt werden.

4. Verfahren nach Anspruch 1, dadurch gekennzeichnet, daß das Teigband durch wenigstens eine durch eine CNC-gesteuerte, elektronisch gesteuerte oder kurvengesteuerte Strahl-Trenneinrichtung geteilt wird.

5. Vorrichtung zur Aufbereitung von Teigstücken zur Herstellung von Kleingebäck, wie etwa rustikalen Brötchen, umfassend eine Teig-Zuführeinrichtung und eine Trenneinrichtung zum Abtrennen einzelner Teigstücke aus der Teigmasse, dadurch gekennzeichnet, daß eine Einrichtung zur Herstellung eines Teigbandes (9) und wenigstens eine Strahl-Trenneinrichtung (17, 23) zum Teilen des Teigbandes (9) in einzelne Teigstücke (25) vorgesehen ist.

6. Vorrichtung nach Anspruch 5, dadurch gekennzeichnet, daß die Strahl-Trenneinrichtung (17, 23) eine Wasserstrahl-Schneideinrichtung ist.

7. Vorrichtung nach Anspruch 5, dadurch gekennzeichnet, daß die Einrichtung zur Herstellung eines Teigbandes (9) durch wenigstens ein unterhalb eines Zuführtrichters (5) angeordnetes, drehangetriebenes Walzenpaar (7) gebildet ist.

8. Vorrichtung nach Anspruch 7, dadurch gekennzeichnet, daß zwei übereinander angeordnete Walzenpaare (7, 8) vorgesehen sind.

9. Vorrichtung nach Anspruch 8, dadurch gekennzeichnet, daß Richtung veriaudes unteren Walzenpaares (8) ein schräg zur vertikalen Richtung verlaufendes Förderband (12) zum Abziehen des Teigbandes (9) vorgesehen ist.

10. Vorrichtung nach Anspruch 5, dadurch gekennzeichnet, daß das Teigband (9) auf eine im wesentlichen horizontale Transporteinrichtung (14) umgelenkt wird.

11. Vorrichtung nach Anspruch 5, dadurch gekennzeichnet, daß quer zur Förderrichtung (Pfeil 18) eine Mehrzahl von Schneid-Trenneinrichtungen (17) im Abstand nebeneinander zur Herstellung von Teigstreifen (19) angeordnet ist.

12. Vorrichtung nach Anspruch 11, dadurch gekennzeichnet, daß die horizontalen Fördereinrichtungen den nebeneinander angeordneten Schneid-Trenneinrichtungen (17) nachgeordnet sind und als Spreizeinrichtung (20) derart ausgebildet sind, daß sie aus einer Mehrzahl von in Förderrichtung (Pfeil 18) divergierenden Teilförderbänder (22) für die einzelnen gebildeten Teigstreifen (19) ausgebildet sind.

13. Vorrichtung nach Anspruch 12, dadurch gekennzeichnet, daß der Spreizeinrichtung (20) in Förderrichtung (Pfeil 18) wenigstens eine quer zur Förderrichtung (Pfeil 18) bewegbare Strahl-Trenneinrichtung (23) nachgeordnet ist.

14. Vorrichtung nach Anspruch 13, dadurch gekennzeichnet, daß der quer zur Förderrichtung (Pfeil 18) verfahrbaren Strahl-Trenneinrichtung (23) eine Fördereinrichtung (26) nachgeordnet ist.
